# EUROPÄISCHE PATENTANMELDUNG

(11) **EP 0 531 930 A1**
(43) Veröffentlichungstag der Anmeldung: **17.03.1993**
(21) Anmeldenummer: 92115331.8
(22) Anmeldetag: 08.09.1992
(51) Int. Cl.: B65D 1/36, A01G 9/10

(54) **Anzucht-, Transport- und Verkaufssteige**

(30) Priorität: 12.09.1991 DE 9111352 U
(71) Anmelder: BACHMANN GmbH, D-55270 Klein-Winternheim (DE)
(72) Erfinder: Bachmann, Josef, CH-6280 Hochdorf (CH)
(74) Vertreter: Fuchs, Luderschmidt & Partner Patentanwälte

(57) **Zusammenfassung**

Eine Anzucht-, Transport- und Verkaufssteige (1) in Form einer rechteckigen, dünnwandigen Schale insbesondere aus tiefgezogenem Kunststoff, besitzt eine die Umfangswand (3) umgebende Schürzenwand (8), die zumindest abschnittsweise an ihrem unteren Rand einen Versteifungsrand (9) aufweist, der mit einer Anzahl sich in Umfangsrichtung der Steige (1) erstreckender, nach außen vorstehender Verstärkungsrippen (14) versehen ist. Die Verstärkungsrippen (14) erlauben eine versetzte Anordnung und Verzahnung der Steigen (1). Der Versteifungsrand (9) ist als Stapelrand ausgebildet. Zusätzlich sind in die Schürzenwand (8) Stütznasen (5a - 5d) eingeformt, die sich nach unten über die Schürzenwand (8) hinaus erstrecken, so daß die Steige mit den Stütznasen (5a - 5d) an einer Halteleiste (27) eines Transportgestells (25) anliegt.

## Beschreibung

Die Erfindung betrifft eine Anzucht-, Transport- und Verkaufssteige in Form einer rechteckigen Schale, insbesondere aus tiefgezogenem Kunststoff mit Umfangswand und Bodenwand, die eine Mehrzahl von Aufnahmenestern zum Einstecken von Gegenständen, insbesondere von bepflanzten Blumentöpfen aufweist, wobei die Umfangswand am oberen Umfangsrand ringsum einstückig über eine erste Biegung in eine sich nach unten erstreckende, die Umfangswand umgebende Schürzenwand übergeht.

Aus DE-GM 8 227 862 sind Transport-, Lager- und Verkaufssteigen bekannt, deren Steigenkörper eine dünne Umfangswand aufweist. Bedingt durch die dünnwandige Ausbildung des schalenförmigen Steigenkörpers erweitert sich die Umfangswand dieser bekannten Transport-, Lager- und Verkaufssteigen von der Bodenwand her zu dem oberen Öffnungsrand der Steige, so daß die Steige ihre größten Außenabmessungen im Bereich des oberen Öffnungsrandes aufweist. Andererseits ist bekannt, Gegenstände, insbesondere Pflanzen in Blumentöpfen mittels derartiger Steigen in Transportgestelle einzusetzen, die die steigentragende Bodenplatten und diese Bodenplatten umgebende Randleisten aufweisen. Dabei sind die Außenabmessungen der Steigen und dieser Transportgestelle aufeinander abgestimmt. Solange massive Steigen aus aufgeschäumtem Kunststoff benutzt werden, ist diese Abstimmung der Steigen-Außenmaße mit den Transportgestell-Innenmaßen geeignet, um seitliches Verschieben der Steigen auf dem Transportgestell zu verhindern. Werden jedoch dünnwandige Steigen der eingangs besprochenen Art auf derartige Transportgestelle gesetzt, so hat die Verjüngung der Steige nach dem Steigenboden zu die Folge, daß die Steige beträchtliche Bewegungsmöglichkeiten für seitliches Verschieben erhält, was vielfach zu Beschädigungen an den transportierten Pflanzen und auch an der Umfangswand der Steige führt. Man hat deshalb auch bereits versucht, Abhilfe zu schaffen, indem man Steigen der oben angegebenen Art mit einer ringsum verlaufenden, sich vom oberen Öffnungsrand des schalenförmigen Steigenkörpers bis in den Randbereich des Steigenbodens erstreckenden Schürzenwand austattete. Es hat sich aber in der Praxis gezeigt, daß eine solche einfache Schürzenwand sowohl bei den oben geschilderten Transportbedingungen, als auch beim Tragen der Steige, eher schädlich als vorteilhaft ist, weil die Schürzenwand insbesondere im Bereich ihrer freien Unterkante nachgiebig ist und zum Einreißen neigt. Schließlich ist eine solche einfache Schürzenwand an ihrer freien Unterkante scharfkantig und verursacht Verletzungen, wenn der Benutzer solche Steigen zum Wegtragen an der Steigenwand anfaßt.

Aus DE-GM 8 710 937 ist daher eine Steige bekannt, deren Schürzenwand an ihrem unteren freien Rand zu einer Versteifung- und Griffrolle umgebördelt ist, wobei zumindest an zwei sich gegenüberliegenden Seiten des Steigenkörpers an ihrem umgebördelten unteren Rand bezüglich der Bodenebene des Steigenkörpers erhöhte Bereiche als Untergreiföffnungen ausgebildet sind. Bei dieser Steige wurde zwar erreicht, Verletzungen durch den Benutzer zu vermeiden, jedoch ist diese Steige gerade im Griffbereich nicht ausreichend stabil genug und enthält darüber hinaus keinerlei Maßnahmen, um ein Verrutschen nebeneinander angeordneter Steigen in Bezug zueinander zu vermieden, wenn sie auf Transportgestellen oder sogenannten Euro-Paletten gelagert sind.

Nun hat man zwar gemäß DE-GM 9 101 620 Haltenasen an der Außenwand der Steige angebracht, die gegenüber der Außenwand vorstehen, um ohne zusätzlichen Materialaufwand auf einfache Weise eventuelle Stöße ohne Beschädigung der Außenwand aufzufangen. Jedoch hat sich in der Praxis gezeigt, daß die Steige nicht die erforderliche Stabilität aufweist und in ihrem mittleren Bereich zum Knicken oder Zerbrechen neigt. Diese Haltenasen verhindern auch kein Verrutschen nebeneinander angeordneter Steigen.

Es ist daher Aufgabe der vorliegenden Neuerung, eine Anzucht-, Transport- und Verkaufssteige zu schaffen, bei der die Stabilität der Steige, insbesondere an deren Umfangskanten, verbessert und gleichzeitig eine Verschiebbarkeit aneinandergereihter Steigen in Bezug zueinander auf Transportgestellen vermieden wird.

Erfindungsgemäß wird die Aufgabe dadurch gelöst, daß die Schürzenwand zumindest abschnittsweise an ihrem unteren Rand unter Ausbildung eines Versteifungsrandes um eine weitere Biegung nach oben geklappt ist, wobei an zumindest zwei gegenüberliegenden Seiten der Steige der Versteifungsrand mit einer Anzahl sich in Umfangsrichtung der Steige erstreckender, nach außen vorstehender Verstärkungsrippen versehen ist.

In bevorzugter Ausführung sind die Verstärkungsrippen an den sich gegenüberliegenden Längsseiten der Steige angeordnet, während die Schmalseiten der Schürzenwand jeweils eine durchgängige Verstärkungsrippe aufweisen. Die Verstärkungsrippen des Versteifungsrandes sind etwa in der halben Höhe der Umfangswand angeordnet.

Die Verstärkungsrippen weisen vorzugsweise gleiche Längen auf, wobei der Zwischenraum oder Abstand zwischen den Verstärkungsrippen größer / gleich der Länge der Verstärkungsrippen ist. Dadurch wird nicht nur die Stabilität erhöht, sondern es wird dadurch die Möglichkeit eröffnet, daß nebeneinander angeordnete Steigen miteinander verzahnt werden können.

Die gleichmäßig beabstandeten Verstärkungsrippen an den Längsseiten der Steige ermöglichen eine gegeneinander versetzte Anordnung von benachbarten Steigen, indem die jeweiligen Verstärkungsrippen in die zwischen den Verstärkungsrippen liegenden Zwischenräume eingreifen und eine Ineinanderverzahnung bilden. Dies hat den weiteren Vorteil, daß mehrere Steigen derart versetzt zueinander angeordnet werden können, daß die in den Aufnahmenestern befindlichen Blumentöpfe auf Lücke zueinander stehen, so daß der Freiraum für die Pflanzen vergrößert wird. Dabei besteht die Möglichkeit, die Steigen um ein, zwei oder drei Verstärkungsrippen versetzt zueinander anzuordnen. Ein Verrutschen der Steigen zueinander wird damit wirksam verhindert. Gleichzeitig kann eine beliebige Anordnung der Steigen in Abhängigkeit vom Transportgestell erfolgen. Insbesondere wenn beispielsweise das Transportgestell länger ist als das ganzzahlige Vielfache der Länge einer Steige, können die Steigenreihen derart versetzt zueinander angeordnet werden, daß jeweils alternierend die äußeren Steigen an der Halteleiste des Transportgestells anliegen, so daß ein stabiler Verbund erreicht wird, der nicht verrutschen kann.

Durch den um mindestens eine weitere Biegung nach oben geklappten Verstärkungsrand sind keine scharfen Kanten mehr an der Steige vorhanden, so daß Verletzungen durch den Benutzer ausgeschlossen sind. Gleichzeitig dient der Verstärkungsrand und die Verstärkungsrippen als Untergreifmöglichkeiten zum Transportieren der Steige.

Der Versteifungsrand ist vorzugsweise mit einem rechteckigen Querschnitt ansgestattet, so daß eine horizontale Auflagefläche auf der Oberseite gebildet wird. Wenn die Höhe des Versteifungsrandes groß genug gewählt ist - vorzugsweise sehr viel größer als die Wanddicke der Steige - dann liegen aufeinandergestapelte Steigen nur mit ihren Versteifungsrändern aufeinander auf. Die Steigen können nicht mehr verklemmen und lassen sich somit leichter wieder voneinander trennen.

In die Schürzenwand sind an mindestens zwei gegenüberliegenden Seiten der Steige jeweils zueinander beabstandete Stütznasen eingeformt, die sich nach unten über die zweite Biegung hinaus und gegenüber der Umfangswand derart weit nach außen erstrecken, daß die Außentangente an den zu jeder Seite gehörenden Stütznasen außerhalb der Umfangswand verläuft. Die Steige liegt somit ausschließlich mit ihren Stütznasen an den Sicherungs- und Halteleisten der Transportgestelle an, so daß Stöße von vornherein aufgefangen werden. Die Einformungen, die in den Stütznasen enden, können sich von der Oberkante der Steige bis in den Bereich zwischen zweiter Biegung und Bodenwand erstrecken.

Durch die Anbringung der Einformungen und der Stütznasen zwischen jeweils zwei benachbarten Aufnahmenestern wird die Stärke der Umfangswand nicht vermindert, sondern die Stabilität zusätzlich erhöht. Durch deren vorstehend genannte Ausbildung ist es möglich, einen geringen Platzbedarf durch Ineinanderstapelbarkeit leerer Steigen zu realisieren. Die leichte Neigung aus der Vertikalen um weniger als 30° unterstützt das Ubereinanderstapeln leerer Steigen. Um diesen Vorteil auch an den Schmalseiten zu nutzen, können dort ebenfalls zwischen den Aufnahmenestern Versteifungsnasen, die auch als Stütznasen ausgebildet sein können, vorgesehen sein.

Die Steigen können eine Wanddicke bis zu 2,5 mm aufweisen, so daß in Verbindung mit den übrigen Merkmalen eine Stabilität erreicht wird, die einen mehrmaligen und umweltfreundlichen Gebrauch der Steigen ohne Beschädigungen gewährleistet.

Die Steigen können mit unterschiedlichen Aufnahmenestern oder auch als Schale ausgebildet sein. Die Aufnahmenester können auch einen offenen Boden aufweisen.

Beispielhafte Ausführungsformen werden nachfolgend anhand der Zeichnungen näher erläutert. Es zeigen:
- Figur 1:: die Draufsicht auf eine Steige;
- Figur 2:: eine Seitenansicht der in Figur 1 gezeigten Steige;
- Figur 3:: eine Teilschnittansicht einer Steige gemäß Figur 2;
- Figur 4:: eine Draufsicht auf eine Anordnung von Steigen auf einem Transportgestell,
- Figur 5:: eine Draufsicht auf zwei versetzte Steigen,
- Figur 6:: eine Draufsicht auf zwei nicht versetzte Steigen,
- Figur 7:: eine Seitenansicht der Schmalseite der Steige und
- Figur 8:: eine Draufsicht auf die Schmalseite der in Figur 7 gezeigten Steige.

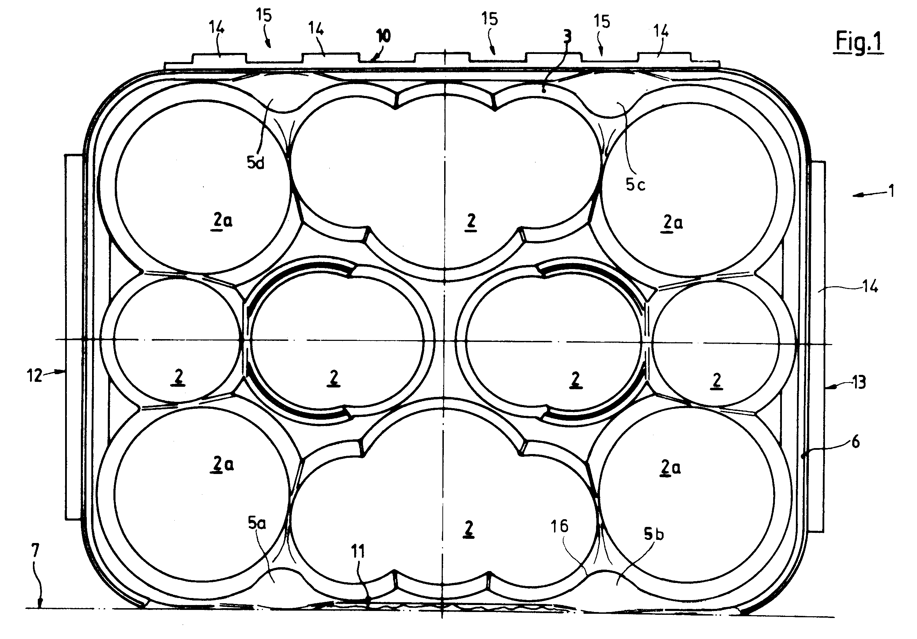

In der Figur 1 ist die Draufsicht auf eine Steige 1 dargestellt, die eine Vielzahl von Aufnahmenestern 2 besitzt, in denen Blumentöpfe unterschiedlicher Größe eingesetzt werden können. Die Aufnahmenester, die in den Eckbereichen der Steige 1 angeordnet sind, tragen das Bezugszeichen 2a. Die Anzucht,-Transport- und Verkaufssteige 1 ist aus einem dünnwandigen, schalenförmigen Steigenkörper gebildet, der eine Umfangswand 3 und eine Bodenwand 4 aufweist. In der hier gezeigten Ausführungsform handelt es sich um eine rechteckige Steige mit den Längsseiten 10 und 11 und den Schmalseiten 12 und 13. An den Längsseiten 10 und 11 sind im Bereich zwischen den Aufnahmenestern 2 und 2a zwei Einformungen 16 mit Stütznasen 5a, 5b, und 5c, 5d eingeformt. Der Rand 6 ist im Bereich der Längsseite 11 teilweise weggebrochen gezeichnet, so daß die die Stütznasen 5a, 5b berührende Tangente 7 deutlicher zu sehen ist. Die Tangente 7 markiert die Lage einer Halteleiste 27 eines Transportgestells 25.

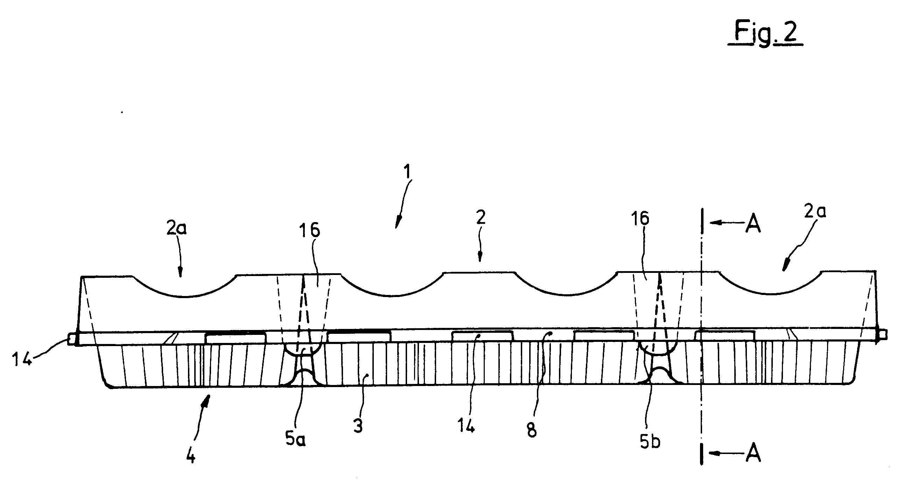

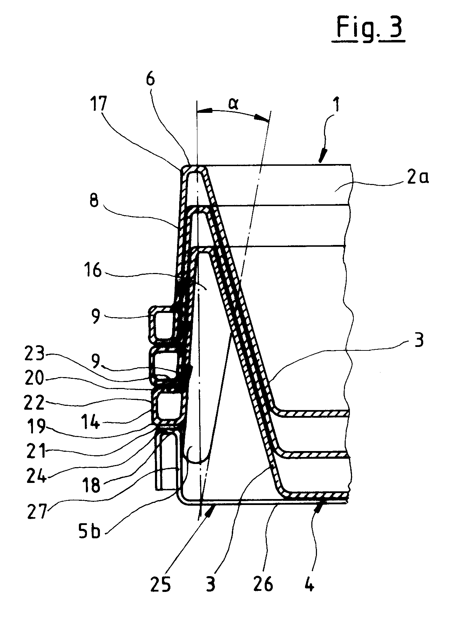

Die Schürzenwand 8 ist, wie in den Figuren 2 und 3 zu sehen ist, eine Verlängerung der Umfangswand 3, wobei die Schürzenwand 8 sich vom Rand 6 über eine erste Biegung 17 in Richtung zur Bodenwand 4 nach unten erstreckt. Während die Umfangswand 3 bezüglich der Vertikalen nach außen geneigt ist, ist die Schürzenwand 8 nach innen geneigt, so daß im Bereich des Randes 6 ein spitzer Winkel gebildet wird. Die Schürzenwand 8 erstreckt sich soweit nach unten, daß sie die Halteleiste 27 des Transportgestells 25 berührt, die mit einer Auflagefläche 24 ausgestattet ist. Am unteren Ende ist die Schürzenwand 8 derart um eine zweite, dritte und vierte Biegung 18, 19, 20 nach oben geklappt, daß ein Versteifungsrand 9 ausgebildet wird, der an der Außenfläche der Schürzenwand 8 gemäß Figur 3 anliegt. Bei der zweiten, dritten und vierten Biegung 18 - 20 handelt es sich jeweils um etwa 90° - Biegungen, so daß ein im Querschnitt rechteckiger Versteifungsrand mit Randabschnitten 22, 23, 24 ausgebildet wird, wovon der Randabschnitt 24 an der Außenseite der Schürzenwand 8 anliegt. Der Randabschnitt 24 kann derart ausgebildet sein, daß ein Etikett oder eine umlaufende Banderole in den Versteifungsrand eingeschoben und klemmend gehalten werden kann.

Der Versteifungsrand 9 ist mit seinen Randabschnitten 22 - 24 derart dimensioniert, so daß er als Stapelrand dient. Wenn mehrere Steigen 1 aufeinandergestapelt sind, liegt jeweils der Randabschnitt 21 auf dem Randabschnitt 23 der darunterliegenden Steige 1 auf, während sich die jeweils benachbarten Umfangs- und Schürzenwände ohne die Last der Steige 1 zu tragen allenfalls berühren.

Auf der Schürzenwand können für den Endverbraucher Etiketten aufgeklebt sein. Es besteht auch die Möglichkeit auf die Schürzenwand eine Schutzfolie oder Schutzpapier aufzukleben, das so weit nach oben vorsteht, daß die in den Aufnahmenestern 2, 2a befindlichen Planzen geschützt werden.

Wie in der Figur 2 und der Figur 3 dargestellt, sind in der Schürzenwand 8 senkrecht verlaufende, fingerförmige Einformungen 16 ausgebildet, die sich vom Rand 6 der Steige 1 in den Bereich zwischen Unterkante der Schürzenwand 8 und der Bodenwand 4 erstrecken und dort in die als sackartige Ausstülpungen ausgebildeten Stütznasen 5a, 5b, 5c und 5d übergehen. Die Stütznasen 5a bis 5d sind derart an der Schürzenwand 8 nach unten hineinragend ausgebildet, daß sie an der Halteleiste 27 anliegen und somit alle seitlichen auf die Steige 1 einwirkenden Kräfte aufnehmen. Zur besseren Stapelbarkeit weisen die Stütznasen 5a-5d einen Neigungswinkel α auf, der in der gezeigten Ausführungsform bei etwa 20° liegt.

An den Schmalseiten 12 und 13 der in Figur 1 gezeigten Steige 1 ist jeweils eine durchgängige Verstärkungsrippe 14 ausgebildet, so daß der Schmalseitenbereich der Steige 1 ausreichend stabil ausgebildet ist. Die Längsseiten 10 und 11 der Steige 1 sind mit einer Anzahl axial gleichmäßig beabstandeter Verstärkungsrippen 14 gleicher Länge versehen, wobei die Zwischenräume 15 zwischen den Verstärkungsrippen der Länge der Verstärkungsrippen 14 entsprechen.

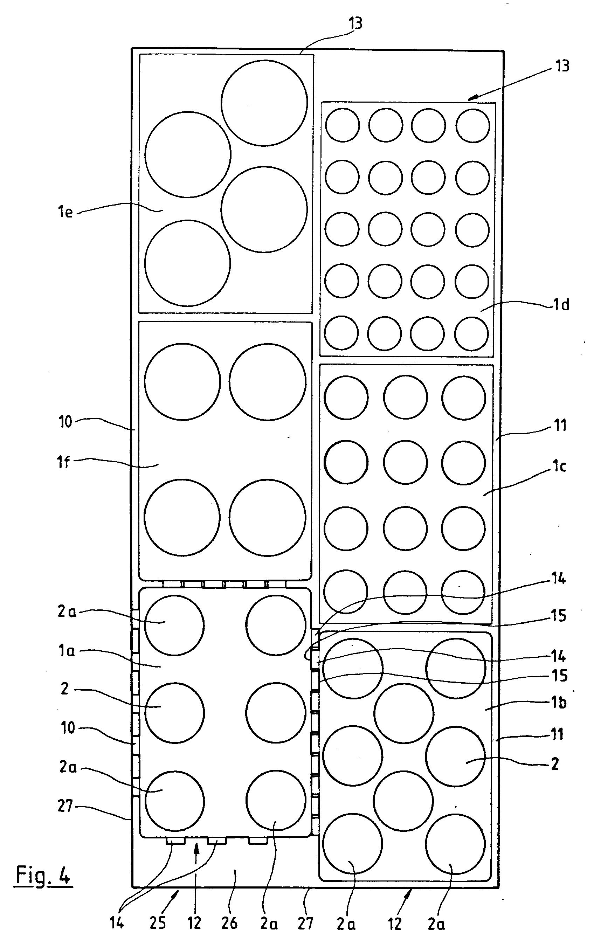

In der Figur 4 ist die Anordnung von insgesamt 6 Steigen 1a - 1f auf einem Transportgestell 25 dargestellt. Die Breite des Transportgestells 25 entspricht der doppelten Breite der Steigen 1a - 1f, so daß die nebeneinanderliegenden Steigen 1a und 1b bzw. 1c, 1f, und 1d, 1e mit ihren Stütznasen an der Halteleiste 27 anliegen, die umlaufend am Bodenblech 26 des Transportgestells 25 vorgesehen ist. Somit können die Steigen 1a - 1f in Querrichtung nicht verrutschen. Die Länge des Transportgestells 25 ist größer als die dreifache Länge der Steigen 1a - 1f. Werden die Steigen versetzt zueinander angeordnet, wobei die jeweiligen Verstärkungsrippen 14 der einen Steige in die Zwischenräume 15 der benachbarten Steige eingreifen, kann eine Anordnung gefunden werden , daß jeweils eine Steige - in dem gezeigten Beispiel sind dies die Steigen 1b und 1e - auch an der Schmalseite des Transportgestellts 25 and der Halteleiste 27 anliegt. Durch die gegenseitige Verzahnung der einzelnen Steigen 1a - 1f wird somit ein stabiler Verbund erzielt, der auch in Längsrichtung des Transportgestells 25 nicht mehr verrutschen kann.

Bei den in Figur 4 gezeigten Steigen 1a - 1f sind lediglich die Steigen 1a und 1b mit Verstärkungsrippen dargestellt. Auf die Darstellung der Verstärkungsrippen der übrigen Steigen wurde verzichtet. Wie in der Figur 4 zu sehen ist, können die Steigen 1a - 1f unterschiedliche Aufnahmenester und Anordnungen von Aufnahmenestern 2, 2a aufweisen.

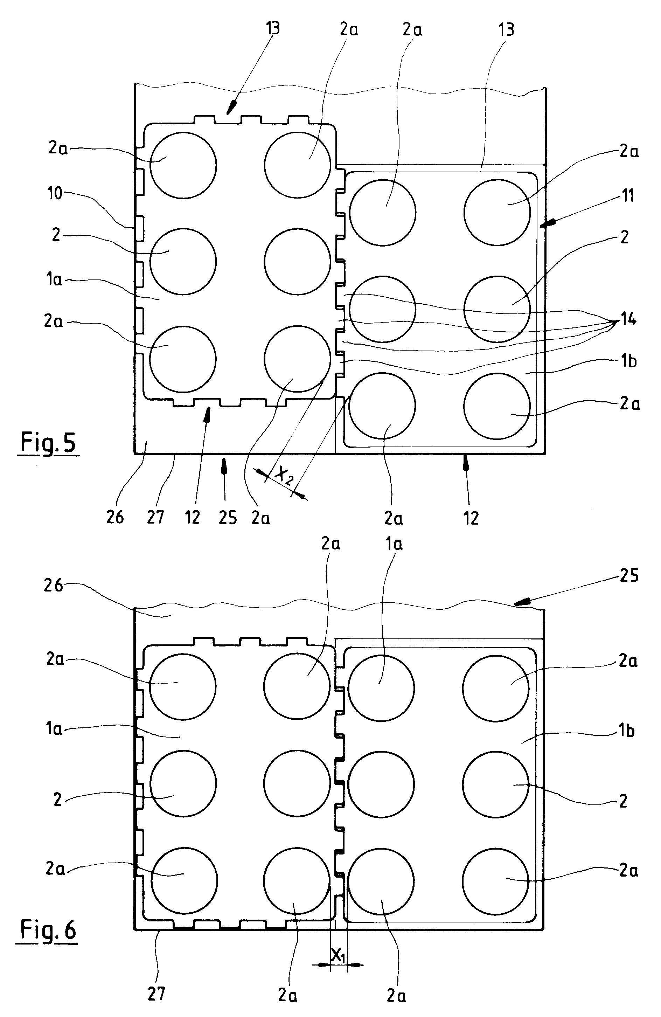

In der Figur 5 sind zwei Steigen 1a und 1b mit jeweils gleichen Aufnahmenestern 2, 2a und auch gleicher Anordnung der Aufnahmenester 2, 2a dargestellt. Während die Steigen 1a und 1b in der Figur 5 versetzt zueinander angeordnet sind, sind die beiden Steigen 1a und 1 b der Figur 6 ohne Versatz nebeneinander positioniert, wobei ebenfalls die Verstärkungsrippen 14 in die jeweiligen Zwischenräume 15 der benachbarten Steige eingreifen. Da beide Steigen 1a und 1b identisch sind, wird der Vorteil des Versatzes in der Figur 5 deutlich. Der Abstand benachbarter Aufnahmenester 2a beträgt in der in Figur 5 gezeigten Anordnung x₂. Wenn beide Steigen 1a und 1b ohne Versatz nebeneinander angeordnet sind, wie dies in Figur 6 zu sehen ist, beträgt der Abstand benachbarter Aufnahmenester 2a lediglich x₁. Durch die versetzte Anordnung der Steigen 1a und 1b wird somit großen Pflanzen, die in den Aufnahmenestern 2, 2a eingesetzt sind, mehr Freiraum verschafft, so daß diese beim Transport nicht beschädigt werden können.

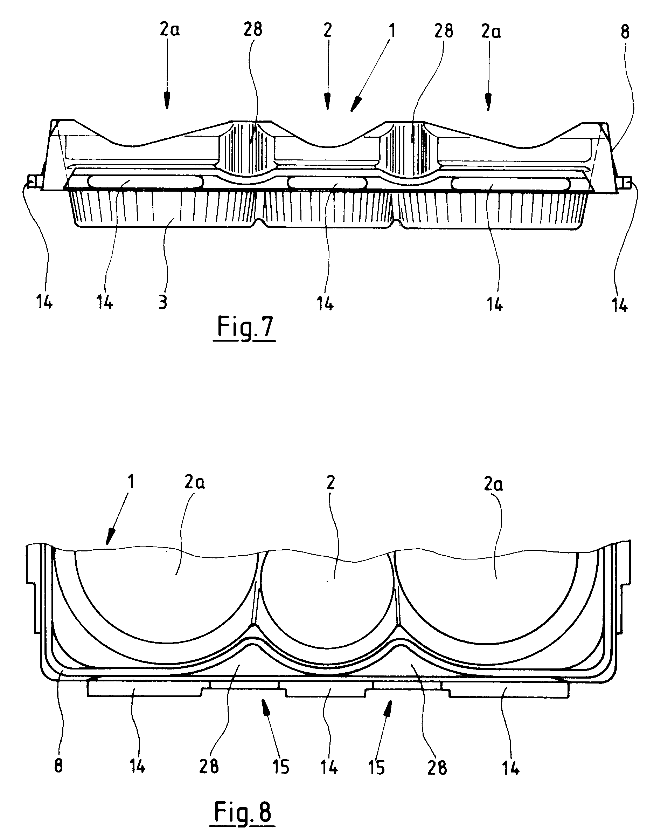

In der Figur 7 ist die Seitenansicht einer Schmalseite einer Steige 1 dargestellt. Bei dieser Ausführungsform sind zwischen den Aufnahmenestern 2a und 2 in der Schürzenwand 8 zusätzliche Versteifungsnasen 28 eingeformt, die sich bis an den unteren Rand der Schürzenwand 8 erstrecken. Falls diese Versteifungsnasen 28 auch eine Haltefunktion übernehmen sollen wie die Stütznasen 5a bis 5d, so können diese Versteifungsnasen 28 auch über den unteren Rand der Schürzenwand 8 hinausragen.

In der Figur 8 ist die Draufsicht auf einen Abschnitt der in der Figur 7 dargestellten Steige zu sehen. Die Versteifungsnasen 28 sind zwischen den Verstärkungsrippen 14 angeordnet, die auch an der Schmalseite der Steige 1 vorgesehen sind.

### Bezugszeichenliste:

- 1.: Steige
- 2, 2a: Aufnahmenest
- 3: Umfangswand
- 4: Bodenwand
- 5a-d: Stütznase
- 6: Rand
- 7: Tangente
- 8: Schürzenwand
- 9: Versteifungsrand
- 10: Längsseite
- 11: Längsseite
- 12: Schmalseite
- 13: Schmalseite
- 14: Verstärkungsrippe
- 15: Zwischenraum
- 16: Einformung
- 17: Erste Biegung
- 18: Zweite Biegung
- 19: Dritte Biegung
- 20: Vierte Biegung
- 21: Randabschnitt
- 22: Randabschnitt
- 23: Randabschnitt
- 24: Auflagefläche
- 25: Transportgestell
- 26: Bodenfläche
- 27: Halteleiste
- 28: Versteifungsnase

## Patentansprüche

1. Anzucht-, Transport- und Verkaufssteige in Form einer rechteckigen Schale, insbesondere aus tiefgezogenem Kunststoff, mit Umfangswand und Bodenwand, die eine Mehrzahl von Aufnahmenestern zum Einstecken von Gegenständen, insbesondere von bepflanzten Blumentöpfen, aufweist, wobei die Umfangswand am oberen Umfangsrand ringsum einstückig über die erste Biegung in eine sich nach unten erstreckende, die Umfangswand umgebende Schürzenwand übergeht, dadurch gekennzeichnet,
daß die Schürzenwand (8) zumindest abschnittsweise an ihrem unteren Rand unter Ausbildung eines Versteifungsrandes (9) um mindestens eine weitere Biegung (15) nach oben geklappt ist, wobei an zumindest zwei gegenüberliegende Seiten (10, 11) der Steige (1, 1a-1f)) der Versteifungsrand (9) mit einer Anzahl sich in Umfangsrichtung der Steige (1, 1a-1f) erstreckender, nach außen vorstehender Verstärkungsrippen (14) versehen ist.

2. Steige nach Anspruch 1, dadurch gekennzeichnet, daß die Verstärkungsrippen (14) gleiche Längen und gleichen Abstand zueinander aufweisen.

3. Steige nach Anspruch 1 oder 2, dadurch gekennzeichnet, daß der Zwischenraum (15) zwischen den Verstärkungsrippen (14) größer/gleich der Länge der Verstärkungsrippen (14) ist.

4. Steige nach einem der Ansprüche 1 bis 3, dadurch gekennzeichnet, daß die Verstarkungsrippen (14) an den sich gegenüberliegenden Längsseiten (10, 11) der Steige (1) angeordnet sind.

5. Steige nach einem der Ansprüche 1 bis 4, dadurch gekennzeichnet, daß an den Schmalseiten (12, 13) der Steige (1) der Versteifungsrand (9) jeweils eine durchgängige Verstärkungsrippe (14) aufweist.

6. Steige nach einem der Ansprüche 1 bis 5, dadurch gekennzeichnet, daß die Verstärkungsrippen (14) der Versteifungswand (9) etwa in der halben Höhe der Umfangswand (3) angeordnet sind.

7. Steige nach einem der Ansprüche 1 bis 6, dadurch gekennzeichnet, daß der Versteifungsrand (9) an der Außenseite der Schürzenwand (8) anliegt.

8. Steige nach einem der Ansprüche 1 bis 7, dadurch gekennzeichnet, daß der Versteifungsrand (9) zumindest im Bereich der Verstärkungsrippen (14) einen rechteckigen Querschnitt aufweist.

9. Steige nach einem der Ansprüche 1 bis 8, dadurch gekennzeichnet, daß der Versteifungsrand (9) ein Stapelrand ist.

10. Steige nach einem der Ansprüche 1 bis 9, dadurch gekennzeichnet, daß in die Schürzenwand (8) an mindestens zwei gegenüberliegenden Seiten der Steige (1) jeweils zueinander beabstandete Stütznasen (5a bis 5d) eingeformt sind, die sich nach unten über die zweite Biegung (18) hinaus erstrecken und gegenüber der Umfangswand (3) derart weit nach außen vorstehen, daß die Außentangente (7) der zu jeder Seite gehörenden Stütznasen (5a bis 5d) außerhalb der Umfangswand (3) verläuft.

11. Steige nach einem der Ansprüche 1 bis 10, dadurch gekennzeichnet, daß in der Schürzenwand (8) senkrecht verlaufende Einformungen (16) ausgebildet sind, die sich von der Oberkante (6) der Steige (1) bis in den Bereich zwischen Unterkante der Schürzenwand (8) und Bodenwand (4) erstrecken, und dort in als sackartig ausgebildete Stütznasen (5a-5d) übergehen.

12. Steige nach einem der Ansprüche 1 bis 11, dadurch gekennzeichnet, daß der Neigungswinkel der Stütznasen (5a bis 5d) < 30° beträgt

13. Steige nach einem der Ansprüche 1 bis 12, dadurch gekennzeichnet, daß die Schürzenwand (8) und die Umfangswand (3) gegeneinander geneigt sind.

14. Steige nach einem der Ansprüche 1 bis 13, dadurch gekennzeichnet, daß an den Schmalseiten (12, 13) in die Schürzenwand (8) zwischen den Aufnahmennestern (2, 21) Versteifungsnasen (28) eingeformt sind.

15. Steige nach Anspruch 14, dadurch gekennzeichnet, daß die Versteifungsnasen (28) als Stütznasen ausgebildet sind.
